# EUROPÄISCHE PATENTANMELDUNG

(11) **EP 4 736 631 A1**
(43) Veröffentlichungstag der Anmeldung: **06.05.2026**
(21) Anmeldenummer: 25199516.3
(22) Anmeldetag: 02.09.2025
(51) Int. Cl.: A01F 15/14, A01F 15/08

(54) **KNOTEREINRICHTUNG**

(30) Priorität: 30.10.2024 DE 102024131696
(71) Anmelder: Usines CLAAS France S.A.S, 57140 St. Rémy / Woippy (FR)
(72) Erfinder: Altmayer, Marc, 57320 Alzing (FR); Rongvaux, Laurent, 54800 Tronville (FR); Albrecht, Jean Constant, 54210 Saint-Nicolas-de-Port (FR); Meaux, Fabien, 57270 Uckange (FR); Saidia, Abdelkader, 57420 Solgne (FR)
(74) Vertreter: CLAAS Gruppe

(57) **Zusammenfassung**

Die vorliegende Erfindung betrifft eine Knotereinrichtung (11) mit einer um eine Antriebsachse (12) zyklisch drehbeweglich antreibbaren Antriebsscheibe (16), einem Knoterhaken (17) zur Bildung von zwei aufeinanderfolgenden Knoten (K) in einem Garnstrangpaar (P), einem schwenkbeweglich antreibbaren Knotenabzugshebel (31), einer Halteeinrichtung (45) und einem Garnmesser (54). Die Halteeinrichtung (45) umfasst eine Klemmplatte (50) und ein Halteelement (51), welche zur Klemmung des Garnstrangpaares (P) zusammenwirken. Das Halteelement (51) ist mittels der Antriebsscheibe (16) um eine Halterachse (46) drehbeweglich antreibbar. Die Knotereinrichtung (11) ist **dadurch gekennzeichnet, dass** die zwei aufeinanderfolgenden Knoten (K) Schlaufenknoten (K_{S}, K_{S1}, K_{S2}) sind, wobei das Garnmesser (54) als ein feststehendes mit der Halteeinrichtung (45) zum Durchtrennen des Garnstrangpaares (P) zusammenwirkendes Garnmesser (54) ausgebildet ist, wobei das Halteelement (51) mittels der Antriebsscheibe (16) um die Halterachse (46) derart drehbeweglich antreibbar ist, dass das Halteelement (51) bei einer vollständigen Umdrehung der Antriebsscheibe (16) eine vollständige Umdrehung durchführt.

## Beschreibung

Die vorliegende Anmeldung betrifft eine Knotereinrichtung gemäß dem Oberbegriff des unabhängigen Patentanspruchs 1, eine landwirtschaftliche Quaderballenpresse gemäß dem Oberbegriff des unabhängigen Patentanspruchs 14 sowie ein Verfahren gemäß dem Oberbegriff des unabhängigen Patentanspruchs 15.

Eine Knotereinrichtung dient grundsätzlich dazu, bei landwirtschaftlichen Quaderballenpressen eine den von der Quaderballenpresse gebildeten Erntegutballen - auch als Quaderballen bezeichnet - umschlingende Garnschlaufe zu verknoten, also darin einen Knoten auszubilden. Eine Quaderballenpresse umfasst typischerweise eine Mehrzahl solcher Knotereinrichtungen, die über eine Breite eines Presskanals der Quaderballenpresse verteilt angeordnet sind. Hierdurch werden in Breitenrichtung des Erntegutballens mehrere durch jeweils einen Knoten verknotete Garnschlaufen ausgebildet, mittels welcher der jeweils gebildete Erntegutballen insgesamt zusammengehalten wird.

Zur Bildung des Knotens umfasst die Knotereinrichtung einen Knoterhaken, welcher wiederum eine Knoterwelle, ein mit der Knoterwelle verbundenes Knoterhakenbasiselement sowie eine relativ zum Knoterhakenbasiselement zwischen einer Schließstellung und einer Offenstellung schwenkbeweglichen Knoterzunge umfasst. Ferner umfasst die Knotereinrichtung eine Halteeinrichtung, mittels der das Garn während eines Knotenbildungsvorgangs gehalten werden kann. Insbesondere ist die Halteeinrichtung dazu eingerichtet, das Garn so lange zu halten bis mittels des Knoterhakens eine Schlaufe im Garn ausgebildet wurde. Der Knoten wird sodann typischerweise durch ein Abziehen der Schlaufe vom Knoterhaken fertiggestellt, wobei gleichzeitig die Schlaufe von dem Knoterhaken durch eine Bewegung der Knoterzunge aktiv oder passiv freigegeben wird.

Knotereinrichtungen der vorstehend beschriebenen Art sind im Stand der Technik bereits hinreichend bekannt. Hierzu wird beispielhaft auf die europäische Patentanmeldung EP 2 564 686 A1 hingewiesen.

Grundsätzlich besteht bei mittels einer Quaderballenpresse gebildeten Erntegutballen der Wunsch eine möglichst hohe Pressdichte des zum Erntegutballen verpressten Ernteguts zu erzielen, um nachgelagerte Prozesse wie den Transport und die Einlagerung der Erntegutballen effizienter zu gestalten. Eine hohe Pressdichte des zum Erntegutballen verpressten Ernteguts sorgt allerdings dafür, dass die Belastung auf die den Erntegutballen umschlingenden Garnschlaufen entsprechend hoch ausfällt. Die Zugfestigkeit des für die Garnschlaufen verwendeten Garns legt dabei grundsätzlich fest, welche maximal zulässige Verdichtung das Erntegut im Erntegutballen erfahren kann, bevor es zu einem Versagen des Garns bzw. der Garnschlaufen und somit einem Zerfall des Erntegutballens kommt. Stellt man die Zugfestigkeit des Garns in unmittelbarer Knotennähe und die Zugfestigkeit abseits des Knotens gegenüber, zeigt sich, dass aufgrund der Knotenbildung im Garn die Zugfestigkeit in unmittelbarer Knotennähe geringer ist als abseits des Knotens. Das Garn bzw. die Garnschlaufen neigen daher dazu, im Bereich der gebildeten Knoten bei einer zu hohen Verdichtung des Ernteguts im Erntegutballen zu versagen. Neben dem Versagen des Garns ist ein weiterer limitierender Faktor, dass die Knoten bereits bei leichten Prozessstörungen durch die wirkenden Zugkräfte nach Abschluss des Knotenbildung eine Neigung zur Öffnung besitzen.

Die durch eine solche Knotereinrichtung gebildeten Knoten in der Garnschlaufe können dabei unterschiedlichen Typs sein, wobei zwischen einem sogenannten Deering-Knoten, auch als konventioneller Knoten bezeichnet, und einem sogenannten McCormick-Knoten, auch als Schlaufenknoten bezeichnet, unterschieden wird.

Hinsichtlich der Zugfestigkeit in unmittelbarer Knotennähe ist die Bildung eines konventionellen Knoten im Garn im Vergleich zur Bildung eines Schlaufenknotens im Garn nachteilig anzusehen. Die Zugfestigkeit des Garns bei Bildung eines konventionellen Knotens im Vergleich zur Bildung eines Schlaufenknotens kann in unmittelbarer Knotennähe bis zu ca. 1/5 geringer ausfallen.

Um trotz einer Garnschwächung durch die Bildung eines Knotens in der Garnschlaufe den Wunsch zu realisieren Erntegutballen mit einer erhöhten Pressdichte zu erzeugen, gibt es Bestrebungen dahingehend eine Garnschlaufe nicht nur mittels eines einzigen Knotens sondern mittels zweier Knoten zu verknoten, wobei jeweils ein Knoten im Bereich der Ballenstirnseiten in der Garnschlaufe ausgebildet wird.

Die Bildung zweier Knoten während eines Bindezyklus der Knotereinrichtung sorgt grundsätzlich für eine höhere Komplexität bei der Auslegung und Gestaltung der Komponenten der Knotereinrichtung sowie im Bindeprozess. Kleinste Störungen im Prozess können bereits dazu führen, dass einer oder beide Knoten nicht zuverlässig gebildet werden, wodurch es zu einem Versagen der gepressten Erntegutballen noch auf Ballenpresse, auf dem Feld oder beim Transport der Erntegutballen kommen kann.

Im Markt sind bereits Quaderballenpressen verfügbar, welche die Bildung von zwei Knoten in einer Garnschlaufe erlauben, wobei ein konventioneller Knoten und ein Schlaufenknoten nacheinander während eines Bindezyklus der Knotereinrichtung gebildet werden. Obgleich der konventionelle Knoten im Vergleich zum Schlaufenknoten eine geringere Zugfestigkeit des Garns in unmittelbarer Knotennähe mit sich bringt, erlauben zwei Knoten zur Bildung einer den Erntegutballen umschlingenden Garnschlaufe im Vergleich zur Bildung von nur einem einzigen Knoten dennoch eine Erhöhung der Pressdichte des Ernteguts im Erntegutballen.

Eine zuvor beschriebene Quaderballenpresse, welche in einem Bindezyklus der Bindeeinrichtung einen konventionellen Knoten und einen Schlaufenknoten bildet, ist aus dem Stand der Technik beispielsweise aus der internationalen Patentanmeldung WO 2015/014616 A1 bekannt.

Für höchstmögliche Pressdichten des Ernteguts im mittels der Quaderballenpresse gebildeten Erntegutballen wäre es allerdings wünschenswert zwei aufeinanderfolgende Schlaufenknoten in einem Bindezyklus der Knotereinrichtung zur Bildung einer den Erntegutballen umschlingenden Garnschlaufe auszubilden.

Aus der internationalen Patentanmeldung WO 2018/202594 A1 ist beispielsweise eine solche Knotereinrichtung zur Bildung von zwei aufeinanderfolgenden Schlaufenknoten grundsätzlich bekannt.

Wie bereits angedeutet bringt die Bildung von zwei aufeinanderfolgenden Knoten zur Bildung einer den Erntegutballen umschlingenden Garnschlaufe eine hohe Prozesskomplexität mit sich. Im Vergleich zur Bildung von zwei aufeinanderfolgenden konventionellen Knoten oder einem konventionellen Knoten und einem Schlaufenknoten ist der Prozess zur Bildung von zwei aufeinanderfolgenden Schlaufenknoten dabei wesentlich sensibler im Hinblick auf Störgrößen während des Bindeprozesses oder Ungenauigkeiten bei der Prozessauslegung, sodass es trotz vollständigem Ablauf des Bindezyklus oftmals nicht zur Bildung von zwei Schlaufenknoten kommt oder aber die zwei Schlaufenknoten nicht mit der erforderlichen Qualität, das heißt Festigkeit, gebildet werden. Wie eingangs geschildert, sorgt dies in der Regel dafür, dass der gepresste Erntegutballen noch auf der Quaderballenpresse, auf dem Feld oder während des Transports aufgrund eines Versagens einer der Garnschlaufen zerfällt. Ein solches Versagen einer Garnschlaufe und ein damit einhergehender Zerfall des Erntegutballens stellt für einen Landwirt oder Lohnunternehmer unter betriebswirtschaftlichen Gesichtspunkten in der Regel einen erheblichen Verlust dar, sodass es dies zu vermeiden gilt.

Ausgehend hiervon ist es demnach die Aufgabe der vorliegenden Erfindung die beschriebenen Nachteile des Standes der Technik auszuräumen und insbesondere eine Knotereinrichtung anzugeben, welche es ermöglicht zwei aufeinanderfolgende Schlaufenknoten in einem Garnstrangpaar zur Bildung einer einen Quaderballen umschlingenden Garnschlaufe stets prozesssicher mit der erforderlichen Qualität, das heißt Festigkeit, zu bilden.

Diese Aufgabe wird erfindungsgemäß durch die Merkmale des unabhängigen Patentanspruchs 1 gelöst, wobei vorteilhafte Weiterbildungen der erfindungsgemäßen Knotereinrichtung Gegenstand der entsprechenden abhängigen Patentansprüche 2 bis 13 sind.

Demnach betrifft die vorliegende Erfindung eine Knotereinrichtung mit einer um eine Antriebsachse zyklisch drehbeweglich antreibbaren Antriebsscheibe, einem mittels der Antriebsscheibe um eine Knoterachse drehbeweglich antreibbaren Knoterhaken zur Bildung von zwei aufeinanderfolgenden Knoten in einem Garnstrangpaar durch zwei vollständige Umdrehungen des Knoterhakens bei einer vollständigen Umdrehung der Antriebsscheibe, einem mittels der Antriebsscheibe um eine Hebelachse schwenkbeweglich antreibbaren Knotenabzugshebel zur Bildung eines Knotens durch ein Abziehen einer mittels des Knoterhakens gebildeten Schlaufe im Garnstrangpaar von dem Knoterhaken, einer Halteeinrichtung zur Klemmung des Garnstrangpaares und einem Garnmesser zum Durchtrennen des Garnstrangpaares. Die Halteeinrichtung umfasst eine Klemmplatte und ein Halteelement, welche zur Klemmung des Garnstrangpaares zusammenwirken, wobei das Halteelement mittels der Antriebsscheibe um eine Halterachse drehbeweglich antreibbar ist. Die Knotereinrichtung ist dadurch gekennzeichnet, dass die zwei aufeinanderfolgenden Knoten Schlaufenknoten sind, wobei das Garnmesser als ein feststehendes mit der Halteeinrichtung zum Durchtrennen des Garnstrangpaares zusammenwirkendes Garnmesser ausgebildet ist, wobei das Halteelement mittels der Antriebsscheibe um die Halterachse derart drehbeweglich antreibbar ist, dass das Halteelement bei einer vollständigen Umdrehung der Antriebsscheibe eine vollständige Umdrehung durchführt.

Durch die erfindungsgemäße Ausgestaltung der Halteeinrichtung mit einem für die Bildung von zwei aufeinanderfolgenden Schlaufenknoten eine vollständige Umdrehung durchführenden Halteelement in Kombination mit einem feststehenden Garnmesser wird im Sinne einer hohen Prozesssicherheit und verringerten Prozesskomplexität sichergestellt, dass die nach dem Durchtrennen des Garnstrangpaares sich bildenden Garnenden jeweils eine für die Bildung eines Schlaufenknotens hinreichende, aber nicht übermäßige Länge besitzen. Das Durchtrennen erfolgt dabei über einen sogenannten Scherenschnitt, da das Garnstrangpaar mittels der Halteeinrichtung durch eine Teildrehbewegung des Halteelements gegen das feststehende Garnmesser geführt bewegt wird. Dieser Prozess sorgt für einen sehr ackuraten und präzisen Schnitt des Garnstrangpaares und ist im Hinblick auf die auf das Garnstrangpaar wirkenden Zugkräfte weniger sensibel, wodurch die Bildung von qualitativ hochwertigen Schlaufenknoten erheblich begünstigt wird. Vorteilhaft wird dabei nicht nur das Garnstrangpaar für die Bildung der beiden aufeinanderfolgenden Schlaufenknoten durchtrennt, sondern das Garnstrangpaar wird für die Bildung des ersten Schlaufenknotens gleichzeitig in Richtung der Knoterachse in den Knoterhaken und gerade nicht, wie bei einem Durchtrennen mittels eines bewegten Garnmessers in Richtung weg von der Knoterachse, also aus dem Knoterhaken, gedrückt. Hierdurch wird die von dem Knoterhaken gebildete Schlaufe für den anschließenden für die Schlaufenknotenbildung ursächlichen Abziehvorgang mittels des Knotenabzugshebels vorteilhaft positioniert, wodurch die Prozesssicherheit in hohem Maße gesteigert werden kann.

Gemäß einer vorteilhaften Weiterbildung der Erfindung ist vorgesehen, dass der Knoterhaken und die Halteeinrichtung derart angeordnet sind, dass die Knoterachse und die Halterachse in Richtung der Antriebsachse der Antriebsscheibe betrachtet einen spitzen Winkel zwischen sich ausbilden.

Durch diese Anordnung wird es möglich die Halteeinrichtung direkt mittels der Antriebsscheibe anzutreiben. Die Komplexität der Knotereinrichtung kann hierdurch wesentlich reduziert werden, da auf zwischen Antriebsscheibe und Halteeinrichtung zwischen geschaltete mechanische Komponenten bzw. Elemente zur Übersetzung und Drehrichtungswandlung verzichtet werden kann. Durch den Verzicht auf solche Komponenten kann im Übrigen die Verlustleistungen reduziert werden, was den Antrieb der Halteeinrichtung effizienter gestaltet.

Gemäß einer vorteilhaften Weiterbildung der Erfindung ist vorgesehen, dass das Halteelement und die Klemmplatte der Halteeinrichtung in Axialrichtung der Halterachse hintereinander angeordnet sind, wobei zwischen dem Halteelement und der Klemmplatte ein Bereich zur Klemmung des Garnstrangpaares ausgebildet ist, wobei die Knotereinrichtung eine einstellbare Andrückvorrichtung umfasst, die dazu vorgesehen und eingerichtet ist, eine in Richtung des Halteelements gerichtete Andrückkraft auf die Klemmplatte auszuüben.

Gemäß einer vorteilhaften Weiterbildung der Erfindung ist vorgesehen, dass der Bereich zur Klemmung des Garnstrangpaares durch zwei einander zugewandte Flächen ausgebildet ist, wobei die eine Fläche dem Halteelement und die andere Fläche der Klemmplatte zugeordnet ist, wobei die der Klemmplatte zugeordnete Fläche eine planare Fläche und die dem Halteelement zugeordnete Fläche eine nicht-planare Fläche ist.

Vorzugsweise ist vorgesehen, dass die dem Halteelement zugeordnete Fläche eine konisch geformte Fläche ist.

Die Anordnung des Haltelements und der Klemmplatte in Axialrichtung hintereinander in Kombination mit der auf die auf die Klemmplatte ausgebübte Andrückkraft sowie vorzugsweise der planaren und nicht-planaren Fläche im Bereich der Klemmung des Garnstrangpaares sorgt für eine sehr präzise Einstellbarkeit der Klemmkräfte, wodurch der insbesondere die Bildung des zweiten Schlaufenknotens vorteilhaft beeinflusst werden kann. Gleichzeitig wird das Garnstrangpaar sehr schonend von der Halteeinrichtung geklemmt, sodass Beschädigungen der Garnstränge und somit zu einem Versagen der Garnstränge während der Schlaufenknotenbildung, insbesondere der Bildung des zweiten Schlaufenknotens, führende Schwächungen der Garnstränge vermieden werden können.

Gemäß einer vorteilhaften Weiterbildung der Erfindung ist vorgesehen, dass das Halteelement eine nutförmige Ausnehmung zur Positionierung und Führung des Garnstrangpaares während der Bildung des zweiten Schlaufenknotens der zwei aufeinanderfolgenden Schlaufenknoten umfasst, wobei die nutförmige Ausnehmung im Halteelement sich in Umfangsrichtung um die Halterachse erstreckend ausgebildet ist.

Vorzugsweise ist vorgesehen, dass die nutförmige Ausnehmung sich in einem Winkelbereich zwischen 20° und 35°, vorzugsweise 25° und 30°, besonders bevorzugt 28° und 30°, in Umfangsrichtung um die Halterachse im Halteelement erstreckend ausgebildet ist.

Die nutförmige Ausnehmung sorgt dafür, dass das Garnstrangpaar während der Bildung des zweiten Schlaufenknotens zuverlässig positioniert und geführt wird, und zwar derart, dass eine für die Bildung des zweiten Schlaufenknotens hinreichende, allerdings nicht übermäßige Länge der Garnenden des Garnstrangpaares erzielt wird.

Gemäß einer vorteilhaften Weiterbildung der Erfindung ist vorgesehen, dass das Halteelement zumindest einen Schneidbügel umfasst, mittels dem das Garnstrangpaar beim drehbeweglichen Antreiben des Halteelements zum Durchtrennen des Garnstrangpaares gegen das feststehende Garnmesser führbar ist.

Vorzugsweise ist vorgesehen, dass der zumindest eine Schneidbügel in Radialrichtung der Halterachse außen am Halteelement angeordnet ist.

Weiter vorzugsweise ist vorgesehen, dass das Halteelement zwei voneinander in Radialrichtung der Halterachse beabstandete Schneidbügel umfasst, mittels welcher das Garnstrangpaar beim drehbeweglichen Antreiben des Halteelements zum Durchtrennen des Garnstrangpaares gegen das feststehende Garnmesser führbar ist, wobei das feststehende Garnmesser derart angeordnet ist, dass bei einem drehbeweglichen Antreiben des Halteelements das feststehende Garnmesser zwischen den zwei Schneidbügeln positioniert ist.

Die Anordnung von Schneidbügeln am drehbeweglichen Halteelement der Halteeinrichtung sorgt dafür, dass während der Teildrehung des Halteelements das Garnstrangpaar geführt gegen die Schneidkante des feststehenden Garnmessers bewegt wird. Der Punkt, in welchem das Garnstrangpaar durchtrennt wird, ist somit stets präzise definiert, was dazu führt, dass die sich ausbildenden Garnenden stets die für die Bildung eines Schlaufenknotens hinreichende Länge aufweisen. Das Garnstrangpaar kann somit im Zeitpunkt des Durchtrennens keiner Fehlpositionierung unterliegen, was sich vorteilhaft auf die Prozesssicherheit auswirkt.

Gemäß einer vorteilhaften Weiterbildung der Erfindung ist vorgesehen, dass das Halteelement einen ersten Bereich und einen zweiten Bereich umfasst, wobei der erste Bereich und der zweite Bereich in Umfangsrichtung der Halterachse voneinander beabstandet sind, wobei der erste Bereich den zumindest einen Schneidbügel und der zweite Bereich die nicht-planare Fläche und die nutförmige Ausnehmung umfasst.

In Kombination mit der Durchführung einer vollständigen Umdrehung des Halteelements während des Bindezyklus kann durch die Schaffung der zwei Bereiche des Halteelements eine Funktionszuordnung erzielt werden, welche die Steuerbarkeit des Knotenbildungsprozesses und die Vulnerabilität des Prozesses im Hinblick auf Störgrößen oder Ungenauigkeiten vorteilhaft beeinflusst. Die zwei Bereiche tragen gemeinsam unter Zusammenwirkung mit der Klemmplatte zur Erfüllung der Funktionen Führen, Klemmen und Durchtrennen des Garnstrangpaares zur Bildung der zwei aufeinanderfolgenden Schlaufenknoten bei. Der erste Bereich umfasst dabei die beiden in Radialrichtung der Halterachse voneinander beabstandeten und außen am Halteelement ausgebildeten Schneidbügel. Der zweite Bereich umfasst die nicht-planare Fläche zur Klemmung des Garnstrangpaares sowie die nutförmige Ausnehmung zur Führung und Positionierung des Garnstrangpaares. Während der vollständigen Drehbewegung wirkend die jeweiligen den Bereich zugeordneten Elemente somit kontrolliert einerseits mit dem Garnstrangpaar und der Klemmplatte zusammen.

Gemäß einer vorteilhaften Weiterbildung der Erfindung ist vorgesehen, dass die Antriebsscheibe einen ersten Verzahnungsbereich zum drehbeweglichen Antreiben des Knoterhakens und einen zweiten Verzahnungsbereich zum drehbeweglichen Antreiben der Halteeinrichtung umfasst, wobei der erste Verzahnungsbereich in Radialrichtung der Antriebsachse der Antriebsscheibe weiter von der Antriebsachse beabstandet ausgebildet ist als der zweite Verzahnungsbereich, wobei jeder der zwei Verzahnungsbereiche jeweils zwei Verzahnungsabschnitte umfasst, welche voneinander in Umfangsrichtung der Antriebsachse der Antriebsscheibe beabstandet ausgebildet sind, wobei immer ein Verzahnungsabschnitt des ersten Verzahnungsbereichs und ein Verzahnungsabschnitt des zweiten Verzahnungsbereichs in Radialrichtung der Antriebsachse der Antriebsscheibe zumindest bereichsweise überlappend ausgebildet sind.

Aufgrund der durch die Ausgestaltung der Verzahnungsbereiche nacheinander einsetzenden Drehbewegung von Knoterhaken und Halteeinrichtung kann sichergestellt werden, dass während der Schlaufenbildung im Knoterhaken zunächst keine den Prozess nachteilig beeinflussende zusätzliche Spannung auf das Garnstrangpaar durch die Halteeinrichtung ausgeübt wird.

Gemäß einer vorteilhaften Weiterbildung der Erfindung ist vorgesehen, dass die Antriebsscheibe eine in Umfangsrichtung der Antriebsachse verlaufende Nockenbahn umfasst, welche dazu vorgesehen und eingerichtet ist, einen an dem Knotenabzugshebel ausgebildeten Nocken während einer Umdrehung der Antriebsscheibe zu führen, wobei die Nockenbahn einen im Wesentlichen eine Kreisbahn beschreibenden Verlauf aufweist, wobei die Nockenbahn zwei voneinander in Umfangsrichtung beabstandete Bahnabschnitte umfasst, welche jeweils einen von einer Kreisbahn abweichenden Verlauf aufweisen, wodurch bei einem Passieren des Bahnabschnitts durch den Nocken der Knotenabzugshebel aus einer ersten Endlage in eine zweite Endlage zum Abziehen der Schlaufe von dem Knoterhaken und anschließend zurück in die erste Endlage um die Hebelachse verschwenkt wird.

Vorzugsweise ist vorgesehen, dass die zwei voneinander in Umfangsrichtung beabstandeten Bahnabschnitte der Nockenbahn jeweils einen bogenförmigen Verlauf aufweisen.

Durch die speziell gestalteten Nockenbahn in der Antriebsscheibe, in welcher der am Knotenabzugshebel ausgebildete Nocken während der Drehbewegung der Antriebsscheibe läuft bzw. gleitet, wird eine besonders unkomplizierte und bauraumeffiziente Möglichkeit geschaffen, den Knotenabzugshebel auszulenken, vorzugsweise gemäß eines definierten Verhältnis zur Erzielung eines Mindestmaßes für einen für die prozesssichere Bildung von zweiaufeinanderfolgenden Schlaufenknoten vorteilhaften sogenannten effektiven Hubweg. Das Ausmaß des Weges zwischen der ersten Endlage und der zweiten Endlage wird dabei durch die Lage des Scheitelpunkts des bogenförmigen Bahnabschnitts sowie die Steigung der inneren Flanken des Bahnabschnitts definiert. Es bedarf somit keiner weiteren mechanischen Komponenten die zwischen dem Knotenabzugshebel und der Antriebsscheibe angeordnet werden, um den für die aufeinanderfolgende Schlaufenknotenbildung erforderlichen effektiven Mindesthubweg des Knotenabzugshebels zu realisieren.

Gemäß einer vorteilhaften Weiterbildung der Erfindung ist vorgesehen, dass der Knoterhaken ein Knoterhakenbasiselement und eine relativ hierzu um eine Knoterschwenkachse zwischen einer Offenstellung und einer Schließstellung schwenkbewegliche Knoterzunge umfasst, wobei die Knoterzunge einen in Richtung des Knoterhakenbasiselements weisenden Vorsprung umfasst, wobei der Vorsprung eine Anlagestruktur umfasst, an welcher das Garnstrangpaar während des Abziehens der Schlaufe von dem Knoterhaken anliegt, wobei sich der Vorsprung ausgehend von einer Innenfläche der Knoterzunge in Richtung des Knoterhakenbasiselements erstreckt.

Vorzugsweise ist vorgesehen, dass die Anlagestruktur des Vorsprungs und die Innenfläche der Knoterzunge in Richtung der Knoterschwenkachse betrachtet einen stumpfen Winkel zwischen sich ausbilden.

Die Ausrichtung der Anlagestruktur des Vorsprungs in Bezug auf die Innenfläche der Knoterzunge derart, dass sich ein stumpfer Winkel ausbildet, sorgt vorteilhaft dafür, dass durch den Vorsprung hinreichend lange ein Widerstand zur Ausbildung eines jeweiligen Schlaufenknotens mit der erforderlichen Festigkeit während des Abziehens der Schlaufe durch den Knotenabzugshebels gebildet wird, gleichzeitig das Abziehen der Schlaufe bzw. des gebildeten Schlaufenknotens durch ein Abgleiten an der in Bezug auf die Innenfläche somit geneigt verlaufenden Anlagestruktur unterstützt wird. Hierdurch wird die Prozesssicherheit während der Bildung eines jedes Schlaufenknotens während des Bindezyklus weiter gesteigert.

Gemäß einer vorteilhaften Weiterbildung der Erfindung ist vorgesehen, dass die Knotereinrichtung ein Griffelement zur Handhabung der Knotereinrichtung während eines Wartungs-, Montage und/oder Transportvorgangs umfasst.

Vorzugsweise ist vorgesehen, dass das Griffelement als Handgriff ausgebildet ist.

Die erfindungsgemäße Aufgabe wird ferner durch eine landwirtschaftliche Ballenpresse mit einer Mehrzahl an solchen Knotereinrichtungen gemäß dem unabhängigen Patentanspruch 14 gelöst.

Die erfindungsgemäße Aufgabe wird ferner durch ein Verfahren zur Bildung von zwei aufeinanderfolgenden Schlaufenknoten in einem Garnstrangpaar mittels einer solchen Knotereinrichtung gemäß dem unabhängigen Patentanspruch 15 gelöst.

Demnach betrifft die vorliegende Erfindung weiterhin ein Verfahren zur Bildung von zwei aufeinanderfolgenden Schlaufenknoten in einem Garnstrangpaar mittels einer solchen Knotereinrichtung. Das Verfahren ist durch die folgenden Verfahrensschritte gekennzeichnet:
- Zuführen des Garnstrangpaares über den Knoterhaken hin zur Halteeinrichtung;
- Durchführen einer vollständigen Umdrehung des Knoterhakens mittels der Antriebsscheibe zur Bildung einer Schlaufe in dem Garnstrangpaar durch den Knoterhaken für den ersten Schlaufenknoten;
- Durchführen einer Drehbewegung des drehbaren Halteelements zum Klemmen des Garnstrangpaares in der Halteeinrichtung mittels der Antriebsscheibe, wobei die Drehbewegung des drehbaren Halteelements nach zumindest teilweise erfolgter Drehbewegung des Knoterhakens und zumindest teilweise erfolgter Bildung der Schlaufe einsetzt;
- Durchtrennen des Garnstrangpaares durch ein Zusammenwirken des feststehenden Garnmessers mit der Halteeinrichtung und zwar nachdem das Garnstrangpaar in der Halteeinrichtung geklemmt wurde;
- Abziehen der Schlaufe vom Knoterhaken mittels des Knotenabzugshebels zur Bildung des ersten Schlaufenknotens;
- Zuführen des Garnstrangpaares von der Halteeinrichtung über den Knoterhaken;
- Durchführen einer vollständigen Umdrehung des Knoterhakens mittels der Antriebsscheibe zur Bildung einer Schlaufe in dem Garnstrangpaar durch den Knoterhaken für den zweiten Schlaufenknoten;
- Durchführen einer Drehbewegung des drehbaren Halteelements zum Freigeben des Garnstrangpaares aus der Halteeinrichtung mittels der Antriebsscheibe, wobei die Drehbewegung des drehbaren Halteelements nach zumindest teilweise erfolgter Drehbewegung des Knoterhakens und zumindest teilweise erfolgter Bildung der Schlaufe einsetzt; und
- Abziehen der Schlaufe vom Knoterhaken mittels des Knotenabzugshebels zur Bildung des zweiten Schlaufenknotens.

Die vorliegende Erfindung wird nachstehend anhand der in den Figuren abgebildeten Ausführungsformen näher beschrieben.

Es zeigen:
- FIG. 1: eine schematische und exemplarische Darstellung einer erfindungsgemäßen landwirtschaftlichen Quaderballenpresse mit einer erfindungsgemäßen Knotereinrichtung zur Bildung von zwei aufeinanderfolgenden Schlaufenk- noten in einem Garnstrangpaar zwecks Bildung einer einen von der erfindungsgemäßen Quaderballenpresse gebildeten Quaderballen umschlingenden Garnschlaufe;
- FIG. 2: eine schematische und exemplarische Darstellung der Bildung der den Quaderballen umschlingend Garnschlaufe mittels der zwei aufeinanderfolgend durch die erfindungsgemäße Knotereinrichtung gebildeten Schlaufenknoten;
- FIG. 3: eine schematische und exemplarische Darstellung der erfindungsgemäßen Knotereinrichtung zur Bildung von zwei aufeinanderfolgenden Schlaufenknoten in einem Garnstrangpaar;
- FIG. 4: eine schematische und exemplarische Darstellung eines Knotenabzugshebels und eines Knoterhakens der erfindungsgemäßen Knotereinrichtung gemäß FIG. 3, wobei der Knoterhaken geschnitten dargestellt ist;
- FIG. 5: eine schematische und exemplarische Darstellung einer Halteeinrichtung der erfindungsgemäßen Knotereinrichtung gemäß FIG. 3; und
- FIGs. 6A-D: eine schematische und exemplarische Darstellung einer Abfolge von Verfahrensschritten zur Bildung von zwei aufeinanderfolgenden Schlaufenknoten in einem Garnstrangpaar mittels der erfindungsgemäßen Knotereinrichtung gemäß FIG. 3.

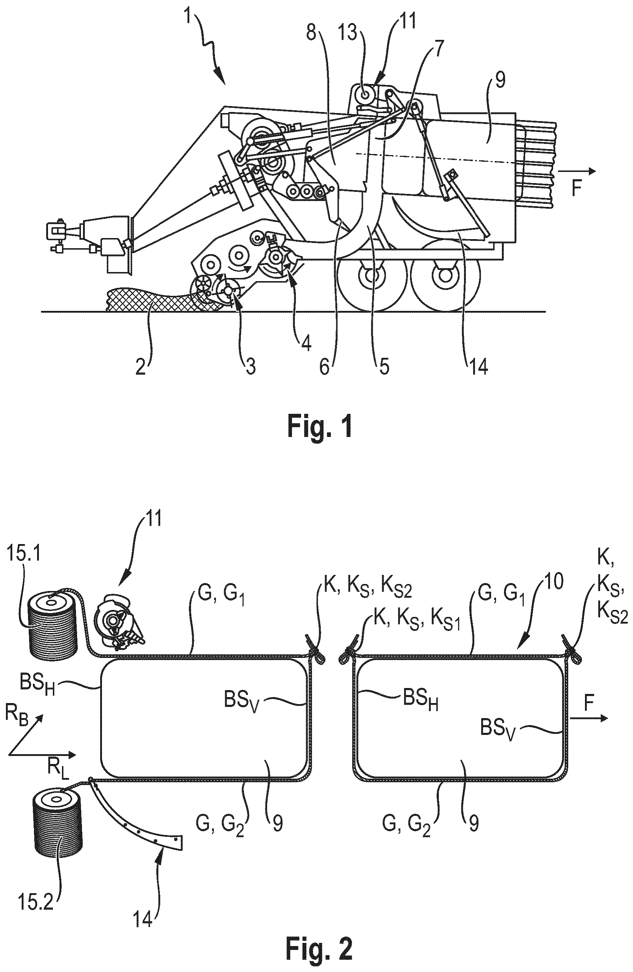

FIG. 1 zeigt eine erfindungsgemäße landwirtschaftliche Quaderballenpresse 1 in einer schematischen und exemplarischen Darstellung. Die Quaderballenpresse 1 ist dazu geeignet, Erntegut 2, das auf einem Untergrund aufliegt, mittels einer Pick-up 3 von dem Untergrund aufzunehmen und zu verarbeiten. Hierbei kann das Erntegut 2 zunächst einem Schneidrotor 4 zugeführt werden, mittels dessen das Erntegut 2 zerkleinert wird. Sodann wird das Erntegut 2 in einen Zuführkanal 5 weitergeleitet und mittels eines Raffers 6 vorverdichtet. Ausgehend von dem Zuführkanal 5 wird das Erntegut 2 zyklisch in einen Presskanal 7 überführt, in dem das Erntegut 2 mittels eines sich in dem Presskanal 7 vor und zurück bewegenden Verdichterkolbens 8 erfasst und verdichtet wird. Hierbei wird das Erntegut 2 mit jedem Zyklus des Verdichterkolbens 8 gegen bereits in dem Presskanal 7 befindliches Erntegut 2 gepresst. Da der Presskanal 7 eine rechteckige Querschnittsform aufweist, entstehen auf diese Weise die typischen quaderförmigen Erntegutballen 9, im Folgenden auch als Quaderballen 9 bezeichnet. Um das Erntegut 2 nach Fertigstellung eines Quaderballens 9 in der Ballenform zusammenzuhalten und ein ungewünschtes "Auseinanderfallen" des verdichteten Ernteguts 2 zu verhindern, werden, wie in FIG. 2 schematisch und exemplarisch dargestellt, Garnschlaufen 10 um den Quaderballen 9 herumgelegt.

Die Applikation der Garnschlaufen 10 an einem jeweiligen Quaderballen 9 erfolgt mittels einer Mehrzahl von erfindungsgemäßen Knotereinrichtungen 11. Die Knotereinrichtungen 11 sind in Reihe hintereinander über eine Breite des Presskanals 7 auf einer um eine Antriebsachse 12 drehbeweglich antreibbaren Antriebswelle 13 verteilt angeordnet, sodass ein jeweiliger Quaderballen 9 in Breitenrichtung R_{B} mit einer Mehrzahl von den Quaderballen 9 in Längsrichtung R_{L} umschlingenden Garnschlaufen 10 eingefasst werden kann. Jede der Knotereinrichtungen 11 bildet dabei eine solche den Quaderballen 9 umschlingende Garnschlaufe 10, indem der Knotereinrichtung 11 zwei mittels einer eine Garnzuführnadel umfassenden Zuführeinrichtung 14 der Quaderballenpresse 1 als Garnstrangpaar P zugeführte Garnstränge G, nämlich ein oberseitig des Quaderballens 9 laufender Garnstrang G₁ und ein unterseitig des Quaderballens 9 laufender Garnstrang G₂, durch zwei aufeinanderfolgende Knoten K von der Knotereinrichtung 11 verknotet werden. Der oberseitig laufende und der unterseitig laufende Garnstrang G₁, G₂ werden jeweils von einer Garnrolle 15.1, 15.2 vorgehalten und durch - in den FIGs. nicht dargestellte - Mittel stramm gehalten.

Charakteristisch für die erfindungsgemäße Knotereinrichtung 11 ist nunmehr, dass die zwei aufeinanderfolgenden in dem Garnstrangpaar P gebildeten Knoten K jeweils Schlaufenknoten K_{S} sind. Die beiden Schlaufenknoten K_{S} sind in Förderrichtung F des Quaderballens 9 betrachtet nahe der vorderen Stirnseite BS_{V} und nahe der hinteren Stirnseite BS_{H} des Quaderballens 9 in der den Quaderballen 9 umschlingenden Garnschlaufe 10 ausgebildet, wie in FIG. 2 zu erkennen. Betrachtet man den von der Knotereinrichtung 11 zur Bildung von zwei aufeinanderfolgenden Schlaufenknoten K_{S} durchzuführenden Bindezyklus, so ist der nahe der hinteren Stirnseite BS_{H} des Quaderballens 9 in der Garnschlaufe 10 ausgebildete Schlaufenknoten K_{S} der erste von der Knotereinrichtung 11 gebildete Schlaufenknoten K_{S1} und der nahe der vorderen Stirnseite BS_{V} des Quaderballens 9 in der Garnschlaufe 10 ausgebildete Schlaufenknoten K_{S} der zweite von der Knotereinrichtung 11 in dem Bindezyklus gebildete Schlaufenknoten K_{S2}.

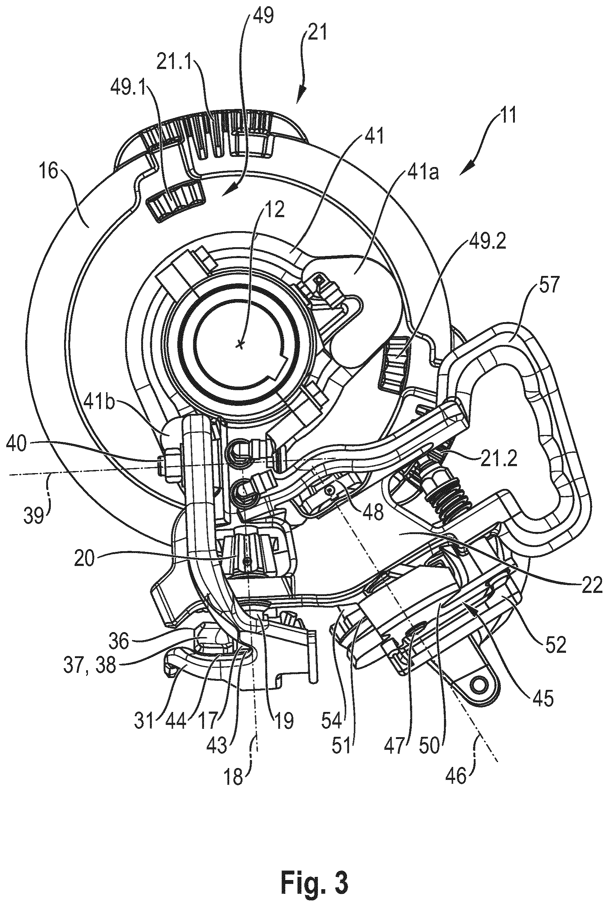

Bezugsnehmend auf die FIGs. 3 bis 6D werden nunmehr die erfindungsgemäße Knotereinrichtung 11 zur Bildung von zwei aufeinanderfolgenden Schlaufenknoten K_{S1}, K_{S2} in dem zugeführten Garnstrangpaar P, wobei die Knotereinrichtung 11 grundsätzlich die Baugruppen Antriebsscheibe, Knoterhaken, Knotenabzugshebel, Halteeinrichtung und Garnmesser umfasst, sowie ein erfindungsgemäßen Verfahren zur Bildung von zwei aufeinanderfolgenden Schlaufenknoten K_{S1}, K_{S2} in dem der Knotereinrichtung 11 zugeführten Garnstrangpaar P näher beschrieben:

Die Knotereinrichtung 11 umfasst demnach eine Antriebsscheibe 16, welche auf der Antriebswelle 13 angeordnet ist und über die Antriebswelle 13 um eine durch die Antriebsachse 12 der Antriebswelle 13 definierte Drehachse zyklisch drehbeweglich antreibbar ist. Zyklisch bedeutet hierbei, dass die Knotereinrichtung 11 bei einer vollständigen Umdrehung der Antriebsscheibe 16 um die Antriebsachse 12, also einer Drehung von 360°, einen vollständigen Bindezyklus, in welchem die zwei aufeinanderfolgenden Schlaufenknoten K_{S1}, K_{S2} ausgebildet werden, vollzieht. Die Antriebsscheibe 16 wirkt mit einem, und zwar genau einem, Knoterhaken 17 zusammen und treibt diesen um eine Knoterachse 18 zur Bildung der zwei aufeinanderfolgenden Schlaufenknoten K_{S1}, K_{S2} in dem Garnstrangpaar P an. Die zwei aufeinanderfolgenden Schlaufenknoten K_{S1}, K_{S2} werden durch die Knotereinrichtung 11 durch zwei vollständige Umdrehungen des Knoterhakens 17, also zwei Drehungen von jeweils 360°, bei einer vollständigen Umdrehung der Antriebsscheibe 16 gebildet. Der Knoterhaken 17 umfasst eine Knoterwelle 19. Die Knoterachse 18 stellt die Rotationsachse der Knoterwelle 19 dar. An dem einen Ende umfasst die Knoterwelle 19 ein Kegelrad 20, welches mit der Antriebsscheibe 16 zum drehbeweglichen Antreiben des Knoterhakens 17 zusammenwirkt. Die Antriebsscheibe 16 umfasst hierzu einen ersten Verzahnungsbereich 21. Die Knoterwelle 19 ist in einem Rahmen 22 der Knotereinrichtung 11 drehbeweglich gelagert, und zwar derart, dass das Kegelrad 20 mit dem ersten Verzahnungsbereich 21 zum drehbeweglichen Antrieb des Knoterhakens 17 zusammenwirken kann.

Der Knoterhaken 17 umfasst weiterhin ein Knoterhakenbasiselement 23, welches an dem anderen Ende der Knoterwelle 19 ausgebildet ist. Das Knoterhakenbasiselement 23 weist eine sich im Wesentlichen in Radialrichtung der Konterachse 18 von der Knoterwelle 19 wegerstreckende hakenförmige Formgebung auf. Im Bereich einer Spitze 24 des Knoterhakenbasiselements 23 kann diese Formgebung bedarfsweise in eine oder mehrere Raumrichtungen geschwungen verlaufen oder aber einen Einzug umfassen, sodass ein die Spitze 24 umfassender Bereich des Knoterhakenbasiselements 23 eine biberschwanz-ähnliche Kontur aufweist. Der Knoterhaken 17 umfasst weiterhin eine Knoterzunge 25. Die Knoterzunge 25 ist um eine Knoterschwenkachse 26 an dem Knoterhakenbasiselement 23 gelagert und relativ zum Knoterhakenbasiselement 23 zwischen einer Offenstellung und einer Schließstellung schwenkbeweglich. Das Knoterhakenbasiselement 23 und die Knoterzunge 25 bilden somit gemeinsam ein Knoterhakenmaul 27 aus und wirken während einer Umdrehung des Knoterhakens 17 zur Bildung einer Schlaufe S im Garnstrangpaar P zusammen.

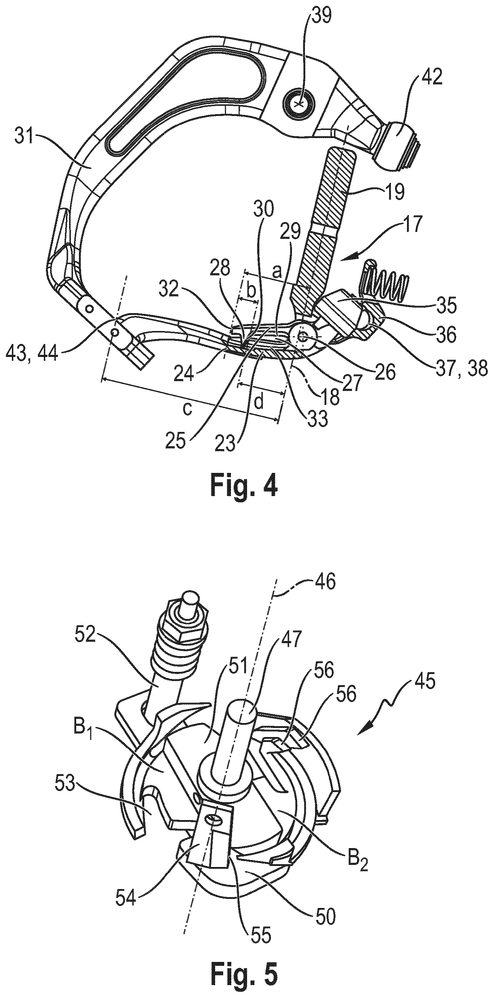

Die Knoterzunge 25 umfasst einen Vorsprung 28, welcher an bzw. ausgehend von einer in Richtung des Knoterhakenbasiselements 23 weisenden Innenfläche 29 der Knoterzunge 25 sich in Richtung des Knoterhakenbasiselements 23 erstreckend bzw. in Richtung des Knoterhakenbasiselements 23 weisend ausgebildet ist und insbesondere in FIG. 4 dargestellt ist. Der Vorsprung 28 weist eine in Richtung der Knoterachse 18 weisende Anlagestruktur 30 auf, an welcher das Garnstrangpaar P während der Bildung der Schlaufe S bei einer Umdrehung des Knoterhakens 17 und bei einem noch näher beschriebenen Abziehen der Schlaufe S von dem Knoterhaken 17 mittels eines Knotenabzugshebels 31 zumindest zeitweise anliegt. Die Anlagestruktur 30 des Vorsprungs 28 und die Innenfläche 29 der Knoterzunge bilden dabei in Richtung der Knoterschwenkachse 26 betrachtet einen Winkel aus. Bevorzugt handelt es sich bei diesem Winkel um einen stumpfen Winkel, welcher vorzugsweise ein Winkelmaß zwischen 90°, wobei 90° nicht eingeschlossen ist, und 130°, wobei 130° miteingeschlossen ist, umfasst. Der Vorsprung 28 ist bevorzugt, wie in den FIGs. dargestellt, derart an der Innenfläche 29 der Knoterzunge 25 ausgebildet, dass sich ein Abstand zwischen einer Spitze 32 der Knoterzunge 25, welche ein von der Knoterschwenkachse 26 bzw. der Knoterachse 18 beabstandetes Ende der Knoterzunge 25 definiert, und dem Vorsprung 28 in Richtung der Knoterschwenkachse 26 bzw. der Knoterachse 18 ergibt. Die Position des Vorsprungs 28 in Relation zur Spitze 32 der Knoterzunge 25 ist dabei vorzugsweise derart gewählt, dass in der Schließstellung der Knoterzunge 25 der direkte Abstand a zwischen der Spitze 32 der Knoterzunge 25 und der Knoterachse 18 mindestens 3-mal, besonders bevorzugt mindestens 3,5-mal, dem direkten Abstand b zwischen der Anlagestruktur 30 des Vorsprungs 28, und zwar an der Stelle, an der sich der Vorsprung 28 von der Innenfläche 29 der Knoterzunge 25 erhebt, und der Spitze 32 der Knoterzunge 25 entspricht. Unter dem Begriff "direkter Abstand" ist hierbei der geringste Abstand zu verstehen, der sich zwischen den referenzierten Strukturen ergibt. Wie insbesondere in FIG. 4 dargestellt, ist der an der Knoterzunge 25 ausgebildete Vorsprung 28 vorzugsweise zahnförmig ausgestaltet. Die Anlagestruktur 30 wird bei dieser Ausgestaltung durch eine in Richtung der Knoterachse 18 weisenden Zahnflanke gebildet. Wie auch die Knoterzunge 25 weist das Knoterhakenbasiselement 23 eine Innenfläche 33 auf, welche entsprechend in Richtung der Knoterzunge 25 weist. Die Innenfläche 33 des Knoterhakenbasiselements 23 umfasst im Bereich ihrer Spitze 24 eine nutförmige Ausnehmung, in welche der Vorsprung 28 der Knoterzunge 25 in der Schließstellung derselben bereichsweise eingreift. Die Innenfläche 29 der Knoterzunge 25, die Anlagestruktur 30 des Vorsprungs 28 und die Innenfläche 33 des Knoterhakenbasiselements 23 definieren somit umfänglich das sich bei einer Drehbewegung des Knoterhakens 17 durch die Schwenkbewegung der Knoterzunge 25 um die Knoterschwenkachse 26 öffnende und schließende Knoterhakenmaul 27.

Zur Steuerung der Bewegung der Knoterzunge 25 zwischen ihrer Schließstellung und ihrer Offenstellung während einer Drehbewegung des Knoterhakens 17 um die Knoterachse 18 zur Bildung der Schlaufe S im Garnstrangpaar P durch den Knoterhaken 17 umfasst der Knoterhaken 17 ein Steuerelement 34, welches koaxial zur Knoterwelle 18 angeordnet ist. Das Steuerelement 34 ist mit dem Rahmen 22 der Knotereinrichtung 11 verbunden, sodass dieses in Bezug auf den Knoterhaken 17 drehfest angeordnet ist. Die Knoterzunge 25 umfasst ein Führungselement 35, welches das von der Knoterschwenkachse 26 beabstandete andere Ende der Knoterzunge 25 definiert. Während einer Umdrehung des Knoterhakens 17 um die Knoterachse 18 wird das an der Knoterzunge 25 ausgebildete Führungselement 35 entlang einer - in den FIGs. nicht erkennbaren - Steuerfläche des Steuerelements 34 geführt. Durch die Führung des Führungselements 35 entlang der Steuerfläche des Steuerelements 34 wird Führungselement 35 in eine radiale Richtung bezogen auf die Knoterachse 18 nach außen gedrängt, wodurch aufgrund eines entsprechenden Hebelarms die gewünschte Schwenkbewegung der Knoterzunge 25 um die Knoterschwenkachse 26 erfolgt. Das Führungselement 35 wirkt während der Drehbewegung des Knoterhakens 17 ferner mit einem Andrückelement 36 der Knotereinrichtung 11 zusammen, welches das Führungselement 35 grundsätzlich unter Ausübung einer Andrückkraft in Richtung radial auf die Knoterachse 18 drückt. Im Zuge der Drehung des Knoterhakens 17 ist das Führungselement 35 mithin nicht frei von dem Steuerelement 34 verdrängbar, sondern nur entgegen der Andrückkraft, die von dem beschriebenen Andrückelement 36 ausgeübt wird. Das Andrückelement 36 ist nicht nur dazu vorgesehen und eingerichtet, die während der Drehung des Knoterhakens 27 die Andrückkraft auf das Führungselement 35 der Knoterzunge 25 auszuüben, sondern ferner auch strukturell derart ausgebildet, dass das Knoterhakenbasiselement 23 und die Knoterzunge 25 während der Umdrehung des Knoterhakens 17 sowohl mit Garnstrangpaar P als auch ohne Garnstrangpaar P das Andrückelement 36 passieren können und zwar ohne von dem Andrückelement 36 blockiert zu werden. Hierzu umfasst eine mit dem Führungselement 35 der Knoterzunge 25 zur Ausübung der Andrückkraft zusammenwirkende Kontaktfläche 37des Andrückelements 36 einen Einzug 38, durch den die Knoterzunge 25 während einer Umdrehung des Knoterhakens 17 ohne Garnstrangpaar P das Andrückelement 36 ohne von dem Andrückelement 36 blockiert zu werden passieren kann, da sich die Knoterzunge 25 ohne Garnstrangpaar P im Knoterhaken 17 beim Passieren des Andrückelements 36 in ihrer Offenstellung befindet.

Die Antriebsscheibe 16 wirkt neben dem Knoterhaken 17 ferner mit dem Knotenabzugshebel 31 zusammen, wobei dieser mittels der Antriebsscheibe 16 beweglich zur Bildung eines Schlaufenknotens K_{S1}, K_{S2} durch das Abziehen der jeweils mittels des Knoterhakens 17 gebildeten Schlaufe S im Garnstrangpaar P von dem Knoterhaken 17 angetrieben wird. Der Knotenabzugshebel 31 ist dabei mittels der Antriebsscheibe 16 reversibel zwischen zwei Endlagen beweglich antreibbar, wobei der Knotenabzugshebel 31 in der ersten Endlage bereichsweise unterhalb des Knoterhakens 17 und in der zweiten Endlage vor dem Knoterhaken 17 positioniert ist. Wie in FIG. 3 dargestellt wird der Knotenabzugshebel 31 bevorzugt mittels der Antriebsscheibe 16 um eine Hebelachse 39 schwenkbeweglich zur Bildung eines Schlaufenknotens K_{S1}, K_{S2} durch das Abziehen der jeweils mittels des Knoterhakens 17 gebildeten Schlaufe S im Garnstrangpaar P von dem Knoterhaken 17 angetrieben. Die Hebelachse 39 verläuft dabei im Wesentlichen quer zur Antriebsachse 12 der Antriebsscheibe 16 durch einen mit dem Rahmen 22 verbundenen Lagerzapfen 40 für den Knotenabzugshebel 31. Der Knotenabzugshebel 31 ist dabei mittels der Antriebsscheibe 16 reversibel zwischen den zwei Endlagen schwenkbeweglich antreibbar, wobei der Knotenabzugshebel 31 wie bereits beschrieben in der ersten Endlage bereichsweise unterhalb des Knoterhakens 17 und in der zweiten Endlage vor dem Knoterhaken 17 positioniert ist. Zum Abziehen der mittels des Knoterhakens 17 durch die Drehbewegung gebildeten Schlaufe S im Garnstrangpaar P von dem Knoterhaken 17 wird der Knotenabzugshebel 31 mittels der Antriebsscheibe 16 während ihrer Drehbewegung um die Antriebsachse 12 aus der ersten Endlage in die zweite Endlage um die Hebelachse 39 bzw. den Lagerzapfen 40 verschwenkt. Ursächlich für die Schwenkbewegung des Knotenabzugshebels 31 um die Hebelachse 39 bzw. den Lagerzapfen 40 ist eine in Umfangsrichtung der Antriebsachse 12 in der Antriebsscheibe 16 verlaufende Nockenbahn 41. Die Nockenbahn 41 ist dazu vorgesehen und eingerichtet, einen an dem Knotenabzugshebel 31 ausgebildeten Nocken 42, welcher auch als Rolle bezeichnet werden kann, während einer Umdrehung der Antriebsscheibe 16 zu führen. Die Nockenbahn 41 weist einen im Wesentlichen eine Kreisbahn beschreibenden Verlauf auf, wobei zwei voneinander in Umfangsrichtung beabstandete Bahnabschnitte 41a, 41b der Nockenbahn 41 jeweils einen von einer Kreisbahn abweichenden bogenförmigen Verlauf aufweisen. Durch den bogenförmigen Verlauf der Bahnabschnitte 41a, 41b wird der Knotenabzugshebel 31 bei einem Passieren eines jeden Bahnabschnitts 41a, 41b durch den Nocken 42 aus der ersten Endlage in die zweite Endlage und zurück in die erste Endlage um die Hebelachse 39 bzw. den Lagerzapfen 40 verschwenkt. Das Ausmaß des Weges zwischen der ersten Endlage und der zweiten Endlage wird dabei durch die Lage des Scheitelpunkts des Bahnabschnitts 41a, 41b sowie die Steigung der inneren Flanken des Bahnabschnitts 41a, 41b definiert.

Der in FIG. 4 gemeinsam mit dem Knoterhaken 17 isoliert dargestellte Knotenabzugshebel 31 gelangt während seiner Schwenkbewegung aus der ersten Endlage in die zweite Endlage mit einer Anlagestruktur 43, die von einer Abziehkante 44 gebildet wird, in Kontakt mit dem Garnstrangpaar P, in welches durch den Knoterhaken 17 die Schlaufe S gebildet wurde, und zieht dadurch die Schlaufe S gegen die Anlagestruktur 30 des Vorsprungs 28 vom Knoterhaken 17 ab bzw. aus dem Knoterhakenmaul 27 heraus, wodurch sich der Schlaufenknoten K_{S1}, K_{S2} bildet. Um die Schlaufe S vom Knoterhaken 17 abzuziehen und dabei den Schlaufenknoten K_{S1}, K_{S2} zu bilden, ist einerseits die Position bzw. Lage der Anlagestruktur 43 des Knotenabzugshebels 31 in der zweiten Endlage sowie die Position bzw. Lage der Anlagestruktur 30 des Vorsprungs 28 entscheidend, da sich hieraus indirekt ein für die Schlaufenknotenbildung ursächlicher effektiver Hubweg des Knotenabzugshebels 31 ergibt. Der effektive Hubweg kann demnach indirekt anhand einer Abhängigkeit der Lage bzw. Position der Anlagestruktur 43 des Knotenabzugshebels 31 in der zweiten Endlage von der Lage bzw. Position der Anlagestruktur 30 des Vorsprungs 28, welches den für die Schlaufenknotenbildung wichtigen Widerstand während des Abziehens der Schlaufe S vom Knoterhaken 17 durch den Knotenabzugshebel 31 definiert, beschrieben werden. Es hat sich gezeigt, dass dieser effektive Hubweg für die prozesssichere Bildung von zwei aufeinanderfolgenden Schlaufenknoten K_{S1}, K_{S2} in einem Bindezyklus durch die Knotereinrichtung 11 ein gewisses Mindestmaß haben muss und zwar ein derartiges Mindestmaß, dass für die zuvor beschriebene Abhängigkeit der Lage bzw. Position der Anlagestrukturen 30, 43 gilt, dass der direkte Abstand c zwischen der Anlagestruktur 43 des Knotenabzugshebels 31 in der zweiten Endlage des Knotenabzugshebels 31 und der Knoterachse 18 mindestens 1,5-mal, vorzugsweise mindestens 3-mal, besonders bevorzugt mindestens 3,2-mal, dem direkten Abstand d zwischen der Anlagestruktur 30 des Vorsprungs 28, und zwar an der Stelle, an der sich der Vorsprung 28 von der Innenfläche 29 der Knoterzunge 25 erhebt, und der Knoterachse 18 in der Schließstellung der Knoterzunge 25 entsprechen muss. Auch hier ist unter dem Begriff "direkter Abstand" der geringste Abstand zu verstehen, der sich zwischen den referenzierten Strukturen ergibt.

Die Antriebsscheibe 16 wirkt weiterhin mit einer Halteeinrichtung 45 zur Klemmung des Garnstrangpaares P zusammen und treibt diese zumindest teilweise drehbeweglich um eine Halterachse 46 während der Bildung der zwei aufeinanderfolgenden Schlaufenknoten K_{S1}, K_{S2} in dem Garnstrangpaar P an. Die Klemmung des Garnstrangpaares P durch die Halteeinrichtung 45 ist dabei insbesondere für die Bildung des zweiten Schlaufenknotens K_{S2} der beiden aufeinanderfolgend in einem Bindezyklus mittels der Knotereinrichtung 11 gebildeten Schlaufenknoten K_{S1}, K_{S2} wichtig. Wie auch der Knoterhaken 17 umfasst die Halteeinrichtung 45 eine Halterwelle 47, wobei die Halterachse 46 die Rotationsachse der Halterwelle 47 darstellt. An dem einen Ende umfasst die Halterwelle 47 ein Kegelrad 48, welches mit der Antriebsscheibe 16 zum drehbeweglichen Antreiben der Halteeinrichtung 45 zusammenwirkt. Die Antriebsscheibe 16 umfasst hierzu einen zweiten Verzahnungsbereich 49. Die Halterwelle 47 ist ebenfalls in dem Rahmen 22 der Knotereinrichtung 11 drehbeweglich gelagert, und zwar derart, dass das Kegelrad 48 mit dem zweiten Verzahnungsbereich 49 zum drehbeweglichen Antrieb der Halteeinrichtung 45 zusammenwirken kann.

Die Halteeinrichtung 45 umfasst weiterhin, wie insbesondere in FIG. 5 dargestellt, eine Klemmplatte 50 und ein Halteelement 51, welche an dem anderen Ende der Halterwelle 47 ausgebildet sind und zur Klemmung des Garnstrangpaares P zusammenwirken. Das Haltelement 51 ist dabei um die Halterachse 46 drehbeweglich antreibbar und hierzu mit der mittels der Antriebsscheibe 16 drehbeweglich antreibbaren Halterwelle 47 verbunden. Die Klemmplatte 50 ist hingegen drehfest angeordnet, sodass diese bei einem Antrieb der Antriebsscheibe 16 stets ortsfest verbleibt, also feststehend ist. Wesentlich für die beschriebene, die feststehende Klemmplatte 50 und das drehbewegliche Halteelement 51 umfassende, Halteeinrichtung 45 ist, dass das Haltelement 51 mittels der Antriebsscheibe 16 derart um die Halterachse 46 drehbeweglich antreibbar ist, dass das Halteelement 51 bei einer vollständigen Umdrehung der Antriebsscheibe 16 eine vollständige Umdrehung, also eine Drehung von 360°, durchführt. Das Haltelement 51 vollzieht somit für die Bildung eines jeden Schlaufenknotens K_{S1}, K_{S2} der beiden aufeinanderfolgend in einem Bindezyklus der Knotereinrichtung 11 gebildeten Schlaufenknoten K_{S1}, K_{S2} lediglich eine Teilumdrehung der vollständigen Umdrehung, jede Teilumdrehung deckt dabei vorzugsweise einen Winkelbereich von 180° ab. Zur Bildung von zwei aufeinanderfolgenden Schlaufenknoten K_{S1}, K_{S2} in einem Bindezyklus der Knotereinrichtung 11 vollführt demnach die Antriebsscheibe 16 eine vollständige Umdrehung während der Knoterhaken 17 zwei vollständige Umdrehungen und das Halteelement 51 der Halteeinrichtung 45 eine vollständige Umdrehung vollführt. Der Knoterhaken 17 und die Halteeinrichtung 45 sind ferner derart angeordnet, dass in Richtung der Antriebsachse 12 der Antriebsscheibe 16 betrachtet, die Knoterachse 18 und die Halterachse 46 einen spitzen Winkel, vorzugsweise einen Winkel kleiner 45°, zwischen sich ausbilden.

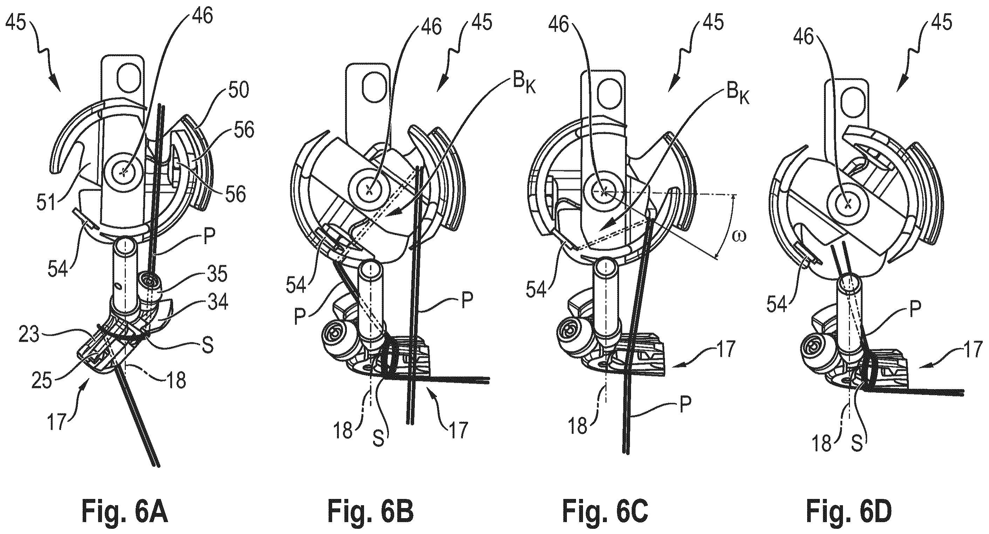

Zwecks Klemmung des Garnstrangpaares P während des mittels der Knotereinrichtung 11 durchgeführten Bindezyklus sind das Halteelement 51 und die Klemmplatte 50 der Halteeinrichtung 45 in Axialrichtung der Halterachse 46 hintereinander angeordnet. Hierdurch bildet sich zwischen dem drehbeweglichen Halteelement 51 und der feststehenden Klemmplatte 50 ein Bereich B_{K} zur Klemmung des Garnstrangpaares P aus, wie in den FIGs. 6B und 6C angedeutet. Zur Einstellung der Klemmkräfte umfasst die Knotereinrichtung 11 eine, vorzugsweise über ein Federelement gemäß einer definierten Kennlinie, einstellbare Andrückvorrichtung 52. Die Andrückvorrichtung 52 ist dazu vorgesehen und eingerichtet, eine in Richtung des Halteelements 51 gerichtete Andrückkraft auf die Klemmplatte 50 auszuüben, wodurch das Garnstrangpaar P zeitweise, für die Bildung des zweiten Schlaufenknotens K_{S2}, während des Bindezyklus bzw. während der vollständigen Umdrehung des Halteelements 51 zwischen der Klemmplatte 50 und dem Halteelement 51 eingeklemmt wird. Damit die von der Andrückvorrichtung 52 auf die Klemmplatte 50 ausgeübte Andrückkraft in einer zwischen dem Halteelement 51 und der Klemmplatte 50 wirkende Klemmkraft zur Klemmung des Garnstrangpaares P resultiert, ist die Klemmplatte 50 an der Halterwelle 47 gelagert, allerdings derart, dass sich die Halterwelle 47 in Bezug auf die Klemmplatte 50 um die Halterachse 46 drehen kann, die Klemmplatte 50 hierdurch jedoch nicht mitbewegt wird sondern sich lediglich in gewissem Maße in Axialrichtung der Halterachse 46 relativ zur Halterwelle 47 bedingt durch die mittels der Andrückvorrichtung 52 aufgebrachte Andrückkraft verlagern kann. Der Bereich B_{K} zur Klemmung des Garnstrangpaares P wird dabei durch zwei einander zugewandte Flächen ausgebildet. Eine erste Fläche ist dabei dem drehbeweglich antreibbaren Halteelement 51 und eine zweite Fläche der feststehenden Klemmplatte 50 zugeordnet. Die der feststehenden Klemmplatte 50 zugeordnete zweite Fläche ist dabei planar ausgebildet, die dem Halteelement 51 zugeordnete erste Fläche hingegen nicht-planar, vorzugsweise konisch geformt. Die beiden Flächen bilden demnach einen Spalt zwischen sich aus, in dem das Garnstrangpaar P während der Klemmung angeordnet ist und welcher mittels der Andrückvorrichtung 52 bzw. der hierdurch ausgeübten Andrückkraft einstellbar ist. Die Spalthöhe variiert somit grundsätzlich aufgrund der unterschiedlichen Ausgestaltung der beiden Flächen als planare bzw. nicht-planare, vorzugsweise konisch geformte, Fläche in Radialrichtung der Halterachse 46 und kann ferner über die Andrückvorrichtung 52 eingestellt werden.

Damit das Garnstrangpaar P während der Bildung des zweiten Schlaufenknotens K_{S2} zuverlässig positioniert und geführt wird, und zwar derart, dass eine für die Bildung des zweiten Schlaufenknotens K_{S2} hinreichende, allerdings nicht übermäßige Länge der Garnenden des Garnstrangpaares P erzielt wird, umfasst das Halteelement 51 eine nutförmige Ausnehmung 53. Die nutförmige Ausnehmung 53 ist derart ausgebildet, dass diese sich in Umfangsrichtung um die Halterachse 46 im Halteelement 51 erstreckt. Eine für die Ausbildung einer hinreichenden Länge der Garnenden vorteilhafte Erstreckung der nutförmigen Ausnehmung 53 in Umfangsrichtung um die Halterachse 46 liegt in einem bestimmten Winkelbereich ω, wie in FIG. 6C zu erkennen. Dieser Winkelbereich ω liegt zwischen 20° und 35°, vorzugsweise 25° und 30°, besonders bevorzugt 28° und 30°.

Damit zwei aufeinanderfolgende Schlaufenknoten K_{S1}, K_{S2} in einem Bindezyklus der Knotereinrichtung 11 gebildet werden können, ist es erforderlich, dass das Garnstrangpaar P mittels eines Garnmessers 54 durchtrennt wird. Das Durchtrennen des Garnstrangpaares P erfolgt dabei während der Bildung des ersten Schlaufenknotens K_{S1}. Bei der insofern bevorzugten, zuvor beschriebenen Ausgestaltung der Halteeinrichtung 45 mit dem über die Antriebsscheibe 16 drehbeweglich antreibbaren Halteelement 51 und der Klemmplatte 50 ist das Garnmesser 54 als feststehendes Garnmesser 54 ausgebildet. Das feststehende Garnmesser 54 wirkt mit der Halteeinrichtung 45 zum Durchtrennen des Garnstrangpaares P zusammen. Das Garnmesser 54 ist am Rahmen 22 der Knotereinrichtung 11 lösbar, beispielsweise über eine Schraubverbindung, angeordnet und erstreckt sich in Richtung der Halteeinrichtung 45, wobei eine Schneidkante 55 des Garnmessers 54 derart ausgerichtet ist, dass das Garnstrangpaar P während der Umdrehung der Halteeinrichtung 45 bzw. des drehbeweglichen Halteelements 51 zum Durchtrennen gegen diese bewegt wird. Damit das Garnstrangpaar P während der Drehbewegung der Halteeinrichtung 45 gegen das feststehende Garnmesser 54 bewegt bzw. geführt wird, umfasst das Halteelement 51 zwei in Radialrichtung der Halterachse 46 außen am Halteelement 51 angeordnete Schneidbügel 56. Die beiden Schneidbügel 56 sind dabei in Radialrichtung der Halterachse 46 voneinander beabstandete ausgebildet, und zwar derart, dass bedingt durch die Anordnung des feststehenden Garnmessers 54 dieses bei einem drehbeweglichen Antreiben des Halteelements 51 zeitweise zwischen den zwei Schneidbügeln 56 positioniert ist. Die Schneidbügel 56 nehmen dabei das Garnstrangpaar P mit und führen dieses gegen das Garnmesser 54, wodurch das Garnstrangpaar P durchtrennt wird. In dem einen Teil des Garnstrangpaares P wird sodann der erste Schlaufenknoten K_{S1} gebildet, der andere Teil des Garnstrangpaares P verbleibt geklemmt in der Halteeinrichtung 45 zwecks Bildung des zweiten Schlaufenknotens K_{S2}. Es sei angemerkt, dass sich ein Durchtrennen des Garnstrangpaares P grundsätzlich auch mit einem beweglichen Garnmesser realisieren lassen würde. Ein solches Garnmesser wäre dann an dem Knotenabzugshebel 31 angeordnet, wobei dieses derart an dem Knotenabzugshebel 31 angeordnet bzw. positioniert sein müsste, dass das Durchtrennen in unmittelbarer Nähe zur Halteeinrichtung 45 erfolgt, da nur so für die Bildung eines Schlaufenknotens K_{S} ausreichend lange Garnenden ausgebildet werden könnten. Die Verwendung eines beweglich Garnmessers ergibt allerdings gewisse prozesstechnische Herausforderungen, sodass das zuvor beschriebene feststehende Garnmesser 54 in Kombination mit der zuvor beschriebenen, die Klemmplatte 50 und das drehbeweglich antreibbare Halteelement 51 umfassenden, Halteeinrichtung 45 die bevorzugte Ausgestaltung darstellt.

Betrachtet man das Halteelement 51 der Halteeinrichtung 45 näher, so lassen sich im Hinblick auf die Bildung der zwei aufeinanderfolgenden Schlaufenknoten K_{S1}, K_{S2} während des Bindezyklus der Knotereinrichtung 11 zwei Bereiche, nämlich ein erster Bereich B₁ und ein zweiter Bereich B₂, welche in Umfangsrichtung der Halterachse 46 voneinander beabstandet sind, definieren. Die zwei Bereiche B₁, B₂ tragen gemeinsam unter Zusammenwirkung mit der Klemmplatte 50 zur Erfüllung der Funktionen Führen, Klemmen und Durchtrennen des Garnstrangpaares P zur Bildung der zwei aufeinanderfolgenden Schlaufenknoten K_{S1}, K_{S2} bei. Der erste Bereich B₁ umfasst die beiden in Radialrichtung der Halterachse 46 voneinander beabstandeten und außen am Halteelement 51 ausgebildeten Schneidbügel 56. Der zweite Bereich B₂ umfasst die nicht-planare, vorzugsweise konisch geformte, Fläche zur Klemmung des Garnstrangpaares P sowie die nutförmige Ausnehmung 53 zur Führung und Positionierung des Garnstrangpaares P.

Betrachtet man nunmehr den Bindezyklus der Knotereinrichtung 11 im Detail erfordert dieser eine Abstimmung der Drehbewegungen von Knoterhaken 17 und Halteeinrichtung 45 bzw. Halteelement 51 zur Bildung eines jeweiligen Schlaufenknotens K_{S} der zwei aufeinanderfolgend gebildeten Schlaufenknoten K_{S1}, K_{S2}. Im Einzelnen ist es vorteilhaft, wenn die Drehbewegung des Knoterhakens 17 stets vor dem Beginn der Drehbewegung der Halteeinrichtung 45 bzw. des Halteelements 51 einsetzt. Hierzu ist die Antriebsscheibe 16 entsprechend strukturell ausgestaltet. Die Antriebsscheibe 16 umfasst wie angedeutet einen ersten Verzahnungsbereich 21 zum drehbeweglichen Antreiben des Knoterhakens 17 und einen zweiten Verzahnungsbereich 49 zum drehbeweglichen Antreiben der Halteeinrichtung 45 bzw. des Halteelements 51. Der erste Verzahnungsbereich 21 ist dabei in Radialrichtung der Antriebsachse 12 der Antriebsscheibe 16 weiter von der Antriebsachse 12 beabstandet ausgebildet als der zweite Verzahnungsbereich 49. Jeder der zwei Verzahnungsbereiche 21, 49 umfasst dabei jeweils zwei Verzahnungsabschnitte 21.1, 21.2, 49.1, 49.2. Diese beiden Verzahnungsabschnitte 21.1, 21.2, 49.1, 49.2 eines jeden Verzahnungsbereiches 21, 49 sind voneinander in Umfangsrichtung der Antriebsachse 12 der Antriebsscheibe 16 beabstandet ausgebildet. Immer ein Verzahnungsabschnitt 21.1, 21.2 des ersten Verzahnungsbereichs 21 und ein Verzahnungsabschnitt 49.1, 49.2 des zweiten Verzahnungsbereichs 49 sind in Radialrichtung der Antriebsachse 12 der Antriebsscheibe 16 zumindest bereichsweise überlappend ausgebildet. Die Teilung und Erstreckung der zwei Verzahnungsbereiche 21.1, 21.2, 49.1, 49.2 eines Verzahnungsbereiches 21, 49 sind vorzugsweise identisch, die Teilung und Erstreckung der Verzahnungsabschnitte 21.1, 21.2 des ersten Verzahnungsbereiches 21 ist in Bezug auf die Teilung und Erstreckung der Verzahnungsabschnitte 49.1, 49.2 des zweiten Verzahnungsbereiches 49 hingegen vorzugsweise verschieden. Durch die bereichsweise Überlappung der Verzahnungsabschnitte 21.1, 21.2, 49.1, 49.2 der beiden Verzahnungsbereiche 21, 49 kann der für die Bildung eines jeden Schlaufenknotens K_{S} der zwei aufeinanderfolgend in einem Bindezyklus der Knotereinrichtung 11 ausgebildeten Schlaufenknoten K_{S1}, K_{S2} erforderliche zuvor beschriebene versetzte Drehbeginn von Knoterhaken 17 und Halteeinrichtung 45 bzw. Halteelement 51 realisiert werden. Damit der Knoterhaken 17 und die Halteeinrichtung 45 bzw. das Halteelement 51 während der Umdrehung der Antriebsscheibe 16 jeweils zwischen den Verzahnungsabschnitten 21.1, 21.2, 49.1, 49.2 an der Antriebsscheibe 16 ohne Drehbewegung entlang bewegt werden kann, können die Kegelräder 20, 48 jeweils eine - in den FIGs. nicht dargestellte - Gleitstruktur umfassen. Diese Gleitstruktur erlaubt ein Gleiten des jeweiligen Kegelrads 20, 48 entlang der Antriebsscheibe 16, ohne dass das jeweilige Kegelrad 20, 49 und somit der Knoterhaken 17 und die Halteeinrichtung 45 bzw. Halteelement 51 dabei drehbeweglich angetrieben werden.

Die Knotereinrichtung 11 kann ein Griffelement 57 umfassten, welches die Handhabung der Knotereinrichtung 11 während eines Wartungs-, Montage und/oder Transportvorgangs erlaubt bzw. erleichtert. Das Griffelelement 57 ist dabei am Rahmen 22 der Knotereinrichtung 11 ausgebildet bzw. im Rahmen 22 geformt, bevorzugt als Handgriff.

Hinsichtlich des Verfahrens für die Bildung der zwei aufeinanderfolgenden Schlaufenknoten K_{S1}, K_{S2} mittels der erfindungsgemäßen Knotereinrichtung 11 in einem Bindezyklus ergibt sich bezugnehmend auf die FIGs. 6A bis 6D folgende Abfolge von Verfahrensschritten. Zunächst wird das Garnstrangpaar P mittels der Zuführeinrichtung 14 über den Knoterhaken 17 gelegt und hin zur Halteeinrichtung 45 geführt. Die Antriebsscheibe 16 wird über die Antriebswelle 13 in Drehbewegung versetzt, wodurch der Knoterhaken 17 eine erste vollständige Umdrehung zur Bildung einer Schlaufe S, also einer ersten Schlaufe S, in dem Garnstrangpaar P für den ersten Schlaufenknoten K_{S1} vollführt. Hierbei wird die Knoterzunge 25 durch Zusammenwirken von Führungselement 35, Steuerelement 34 und Andrückelement 36 relativ zum Knoterhakenbasiselement 25 zwischen ihrer Schließstellung und Offenstellung verschwenkt, wodurch sich in Kombination mit der Drehbewegung des Knoterhakens 17 die Schlaufe S auf dem Knoterhaken 17 ausbildet. Weiterhin vollführt bedingt durch die Drehbewegung der Antriebsscheibe 16 auch das drehbare Halteelement 51 der Halteeinrichtung 45 eine Drehbewegung, zunächst jedoch nur eine Teildrehbewegung der während des Bindezyklus durchzuführenden vollständigen Umdrehung, welche vorzugsweise 180° beträgt. Durch die Drehbewegung des Halteelements 51 wird das Garnstrangpaar P in der Halteeinrichtung 45 zwischen der Klemmplatte 50 und dem Halteelement 51 geklemmt. Die Drehbewegung des drehbaren Halteelements 51 setzt dabei allerdings erst nach zumindest teilweise erfolgter Drehbewegung des Knoterhakens 17 und somit zumindest teilweise erfolgter Bildung der ersten Schlaufe S ein. Nachdem das Garnstrangpaar P in der Halteeinrichtung 45 geklemmt wurde, wirkt das feststehende Garnmesser 54 mit der Halteeinrichtung 45 zum Durchtrennen des Garnstrangpaares P zusammen. Die an dem drehbeweglich angetriebenen Halteelement 51 angeordneten Schneidbügel 56 führen das Garnstrangpaar P bedingt durch die Teildrehbewegung des Halteelements 51 gegen die Schneidkante 55 des feststehenden Garnmessers 54, welches während des Schneidvorgangs zwischen den beiden Schneidbügeln 56 positioniert ist, wodurch das Garnstrangpaar P mittels eines Scherenschnitts durchtrennt wird. Anschließend wird die vom Knoterhaken 17 gebildete erste Schlaufe S mittels des Knotenabzugshebels 31 zur Bildung des ersten Schlaufenknotens K_{S1} von dem Knoterhaken 17 abgezogen. Hierfür wird der Knotenabzugshebel 31 aus der ersten Endlage in die zweite Endlage verschwenkt durch ein Passieren eines Bahnabschnittes 41a, 41b der beiden Bahnabschnitte 41a, 41b der Nockenbahn 41 durch den Nocken 42 des Knotenabzugshebels 31. Sobald der erste Schlaufenknoten K_{S1} durch Abziehen der Schlaufe S vom Knoterhaken 17 gebildet wurde, wird der Knotenabzugshebel 31 ebenfalls bedingt durch den Bahnabschnitt 41a, 41b der Nockenbahn 41 aus der zweiten Endlage zurück in die erste Endlage verschwenkt, wodurch sich dieser in der Ausgangsposition für den Abzug des zweiten Schlaufenknotens K_{S2} befindet. Nachdem der erste Schlaufenknoten K_{S1} gebildet wurde, wird das Garnstrangpaar P mittels der Zuführeinrichtung 14 von der Halteeinrichtung 45, in welcher es geklemmt ist, erneut über den Knoterhaken 17 geführt. Der Knoterhaken 17 vollführt bedingt durch die fortwährende Drehbewegung der Antriebsscheibe 16 eine zweite vollständige Umdrehung zur Bildung einer weiteren Schlaufe S, also zweiten Schlaufe S, in dem Garnstrangpaar P für den zweiten Schlaufenknoten K_{S2}. Hierbei wird erneut die Knoterzunge 25 durch Zusammenwirken von Führungselement 35, Steuerelement 34 und Andrückelement 36 relativ zum Knoterhakenbasiselement 25 zwischen ihrer Schließstellung und Offenstellung verschwenkt, wodurch sich in Kombination mit der Drehbewegung des Knoterhakens 17 die zweite Schlaufe S auf dem Knoterhaken 17 ausbildet. Weiterhin vollführt bedingt durch die Drehbewegung der Antriebsscheibe 16 auch das drehbare Halteelement 51 der Halteeinrichtung 45 wieder eine Drehbewegung, und zwar die für die vollständige Umdrehung während des Bindezyklus noch erforderliche restliche Teildrehbewegung, welche vorzugsweise ebenfalls 180° beträgt. Hierbei wird das in der Halteeinrichtung 45 noch zwischen der Klemmplatte 50 und dem Halteelement 51 geklemmte Garnstrangpaar P aus der Halteeinrichtung 45 freigegeben. Auch hier setzt die Drehbewegung des drehbaren Halteelements 51 allerdings erst nach zumindest teilweise erfolgter Drehbewegung des Knoterhakens 17 und somit zumindest teilweise erfolgter Bildung der zweiten Schlaufe S ein. Anschließend wird die vom Knoterhaken 17 gebildete zweite Schlaufe S mittels des Knotenabzugshebels 31 zur Bildung des zweiten Schlaufenknotens K_{S2} von dem Knoterhaken 17 abgezogen. Hierfür wird der Knotenabzugshebel 31 erneut aus der ersten Endlage in die zweite Endlage verschwenkt durch ein Passieren des weiteren Bahnabschnittes 41b, 41a der beiden Bahnabschnitte 41a, 41b der Nockenbahn 41 durch den Nocken 42 des Knotenabzugshebels 31. Eine den Quaderballen 9 umschlingende Garnschlaufe 10 wird so mittels der erfindungsgemäßen Knotereinrichtung 11 durch das Bilden zwei aufeinanderfolgender Schlaufenknoten K_{S1}, K_{S2} in einem Bindezyklus gebildet.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

**Bezugszeichenliste**

| | | | |
|---|---|---|---|
| 1 | Landwirtschaftliche Quaderballenpresse | 27 28 | Knoterhakenmaul Vorsprung |
| 2 | Erntegut | 29 | Innenfläche |
| 3 | Pick-up | 30 | Anlagestruktur |
| 4 | Schneidrotor | 31 | Knotenabzugshebel |
| 5 | Zuführkanal | 32 | Spitze |
| 6 | Raffer | 33 | Innenfläche |
| 7 | Presskanal | 34 | Steuerelement |
| 8 | Verdichterkolben | 35 | Führungselement |
| 9 | Quaderballen | 36 | Andrückelement |
| 10 | Garnschlaufe | 37 | Kontaktfläche |
| 11 | Knotereinrichtung | 38 | Einzug |
| 12 | Antriebsachse | 39 | Hebelachse |
| 13 | Antriebswelle | 40 | Lagerzapfen |
| 14 | Zuführeinrichtung | 41 | Nockenbahn |
| 15.1, 15.2 | Garnrolle | 41a, 41b | Bahnabschnitt |
| 16 | Antriebsscheibe | 42 | Nocken bzw. Rolle |
| 17 | Knoterhaken | 43 | Anlagestruktur |
| 18 | Knoterachse | 44 | Abziehkante |
| 19 | Knoterwelle | 45 | Halteeinrichtung |
| 20 | Kegelrad | 46 | Halterachse |
| 21 | Erster Verzahnungsbereich | 47 | Halterwelle |
| 21.1, 21.2 | Verzahnungsabschnitt | 48 | Kegelrad |
| 22 | Rahmen | 49 | Zweiter Verzahnungsbereich |
| 23 | Knoterhakenbasiselement | 49.1, 49.2 | Verzahnungsabschnitt |
| 24 | Spitze | 50 | Klemmplatte |
| 25 | Knoterzunge | 51 | Halteelement |
| 26 | Knoterschwenkachse | | |
| 52 | Andrückvorrichtung | | |
| 53 | Ausnehmung | | |
| 54 | Garnmesser | | |
| 55 | Schneidkante | | |
| 56 | Schneidbügel | | |
| 57 | Griffelement | | |

- R_{B}: Breitenrichtung
- R_{L}: Längsrichtung
- F: Förderrichtung
- BS_{V}: Vordere Stirnseite
- BS_{H}: Hintere Stirnseite
- P: Garnstrangpaar
- G, G₁, G₂: Garnstrang
- K: Knoten
- K_{S}: Schlaufenknoten
- K_{S1}: Erster Schlaufenknoten
- K_{S2}: Zweiter Schlaufenknoten
- S: Schlaufe
- a: Direkter Abstand
- b: Direkter Abstand
- c: Direkter Abstand
- d: Direkter Abstand
- ω: Winkelbereich
- B_{K}: Bereich zur Klemmung
- B₁: Erster Bereich Halteelement
- B₂: Zweiter Bereich Halteelement

## Patentansprüche

1. Knotereinrichtung (11) mit einer um eine Antriebsachse (12) zyklisch drehbeweglich antreibbaren Antriebsscheibe (16), einem mittels der Antriebsscheibe (16) um eine Knoterachse (18) drehbeweglich antreibbaren Knoterhaken (17) zur Bildung von zwei aufeinanderfolgenden Knoten (K) in einem Garnstrangpaar (P) durch zwei vollständige Umdrehungen des Knoterhakens (17) bei einer vollständigen Umdrehung der Antriebsscheibe (16), einem mittels der Antriebsscheibe (16) um eine Hebelachse (39) schwenkbeweglich antreibbaren Knotenabzugshebel (31) zur Bildung eines Knotens (K) durch ein Abziehen einer mittels des Knoterhakens (17) gebildeten Schlaufe (S) im Garnstrangpaar (P) von dem Knoterhaken (17), einer Halteeinrichtung (45) zur Klemmung des Garnstrangpaares (P) und einem Garnmesser (54) zum Durchtrennen des Garnstrangpaares (P), wobei die Halteeinrichtung (45) eine Klemmplatte (50) und ein Halteelement (51) umfasst, welche zur Klemmung des Garnstrangpaares (P) zusammenwirken, wobei das Halteelement (51) mittels der Antriebsscheibe (16) um eine Halterachse (46) drehbeweglich antreibbar ist, **dadurch gekennzeichnet, dass** die zwei aufeinanderfolgenden Knoten (K) Schlaufenknoten (K_{S}, K_{S1}, K_{S2}) sind, wobei das Garnmesser (54) als ein feststehendes mit der Halteeinrichtung (45) zum Durchtrennen des Garnstrangpaares (P) zusammenwirkendes Garnmesser (54) ausgebildet ist, wobei das Halteelement (51) mittels der Antriebsscheibe (16) um die Halterachse (46) derart drehbeweglich antreibbar ist, dass das Halteelement (51) bei einer vollständigen Umdrehung der Antriebsscheibe (16) eine vollständige Umdrehung durchführt.

2. Knotereinrichtung (11) nach Anspruch 1, **dadurch gekennzeichnet, dass** der Knoterhaken (17) und die Halteeinrichtung (45) derart angeordnet sind, dass die Knoterachse (18) und die Halterachse (46) in Richtung der Antriebsachse (12) der Antriebsscheibe (16) betrachtet einen spitzen Winkel zwischen sich ausbilden.

3. Knotereinrichtung (11) nach Anspruch 1 oder 2, **dadurch gekennzeichnet, dass** das Halteelement (51) und die Klemmplatte (50) der Halteeinrichtung (45) in Axialrichtung der Halterachse (46) hintereinander angeordnet sind, wobei zwischen dem Halteelement (51) und der Klemmplatte (50) ein Bereich (B_{K}) zur Klemmung des Garnstrangpaares (P) ausgebildet ist, wobei die Knotereinrichtung (11) eine einstellbare Andrückvorrichtung (52) umfasst, die dazu vorgesehen und eingerichtet ist, eine in Richtung des Halteelements (51) gerichtete Andrückkraft auf die Klemmplatte (50) auszuüben.

4. Knotereinrichtung (11) nach Anspruch 3, **dadurch gekennzeichnet, dass** der Bereich (B_{K}) zur Klemmung des Garnstrangpaares (P) durch zwei einander zugewandte Flächen ausgebildet ist, wobei die eine Fläche dem Halteelement (51) und die andere Fläche der Klemmplatte (50) zugeordnet ist, wobei die der Klemmplatte (50) zugeordnete Fläche eine planare Fläche und die dem Halteelement (51) zugeordnete Fläche eine nicht-planare, vorzugsweise eine konisch geformte, Fläche ist.

5. Knotereinrichtung (11) nach einem der Ansprüche 1 bis 4, **dadurch gekennzeichnet, dass** das Halteelement (51) eine nutförmige Ausnehmung (53) zur Positionierung und Führung des Garnstrangpaares (P) während der Bildung des zweiten Schlaufenknotens (K_{S2}) der zwei aufeinanderfolgenden Schlaufenknoten (K_{S}, K_{S1}, K_{S2}) umfasst, wobei die nutförmige Ausnehmung (53) im Halteelement (51) sich in Umfangsrichtung um die Halterachse (46) erstreckend ausgebildet ist.

6. Knotereinrichtung (11) nach Anspruch 5, **dadurch gekennzeichnet, dass** die nutförmige Ausnehmung (53) sich in einem Winkelbereich (ω) zwischen 20° und 35°, vorzugsweise 25° und 30°, besonders bevorzugt 28° und 30°, in Umfangsrichtung um die Halterachse (46) im Halteelement (51) erstreckend ausgebildet ist.

7. Knotereinrichtung (11) nach einem der Ansprüche 1 bis 6, **dadurch gekennzeichnet, dass** das Halteelement (51) zumindest einen, vorzugsweise in Radialrichtung der Halterachse (46) außen am Halteelement (51) angeordneten, Schneidbügel (56) umfasst, mittels dem das Garnstrangpaar (P) beim drehbeweglichen Antreiben des Halteelements (51) zum Durchtrennen des Garnstrangpaares (P) gegen das feststehende Garnmesser (54) führbar ist.

8. Knotereinrichtung (11) nach Anspruch 7, **dadurch gekennzeichnet, dass** das Halteelement (51) zwei voneinander in Radialrichtung der Halterachse (46) beabstandete Schneidbügel (56) umfasst, mittels welcher das Garnstrangpaar (P) beim drehbeweglichen Antreiben des Halteelements (51) zum Durchtrennen des Garnstrangpaares (P) gegen das feststehende Garnmesser (54) führbar ist, wobei das feststehende Garnmesser (54) derart angeordnet ist, dass bei einem drehbeweglichen Antreiben des Halteelements (51) das feststehende Garnmesser (54) zwischen den zwei Schneidbügeln (56) positioniert ist.

9. Knotereinrichtung (11) nach den Ansprüche 4 bis 8, **dadurch gekennzeichnet, dass** das Halteelement (51) einen ersten Bereich (B₁) und einen zweiten Bereich (B₂) umfasst, wobei der erste Bereich (B₁) und der zweite Bereich (B₂) in Umfangsrichtung der Halterachse (46) voneinander beabstandet sind, wobei der erste Bereich (B₁) den zumindest einen Schneidbügel (56) und der zweite Bereich (B₂) die nicht-planare Fläche und die nutförmige Ausnehmung (53) umfasst.

10. Knotereinrichtung (11) nach einem der Ansprüche 1 bis 9, **dadurch gekennzeichnet, dass** die Antriebsscheibe (16) einen ersten Verzahnungsbereich (21) zum drehbeweglichen Antreiben des Knoterhakens (17) und einen zweiten Verzahnungsbereich (49) zum drehbeweglichen Antreiben der Halteeinrichtung (45) umfasst, wobei der erste Verzahnungsbereich (21) in Radialrichtung der Antriebsachse (12) der Antriebsscheibe (16) weiter von der Antriebsachse (12) beabstandet ausgebildet ist als der zweite Verzahnungsbereich (49), wobei jeder der zwei Verzahnungsbereiche (21, 49) jeweils zwei Verzahnungsabschnitte (21.1, 21.2, 49.1, 49.2) umfasst, welche voneinander in Umfangsrichtung der Antriebsachse (12) der Antriebsscheibe (16) beabstandet ausgebildet sind, wobei immer ein Verzahnungsabschnitt (21.1, 21.2) des ersten Verzahnungsbereichs (21) und ein Verzahnungsabschnitt (49.1, 49.2) des zweiten Verzahnungsbereichs (49) in Radialrichtung der Antriebsachse (12) der Antriebsscheibe (16) zumindest bereichsweise überlappend ausgebildet sind.

11. Knotereinrichtung (11) nach einem der Ansprüche 1 bis 10, **dadurch gekennzeichnet, dass** die Antriebsscheibe (16) eine in Umfangsrichtung der Antriebsachse (12) verlaufende Nockenbahn (41) umfasst, welche dazu vorgesehen und eingerichtet ist, einen an dem Knotenabzugshebel (31) ausgebildeten Nocken (42) während einer Umdrehung der Antriebsscheibe (16) zu führen, wobei die Nockenbahn (41) einen im Wesentlichen eine Kreisbahn beschreibenden Verlauf aufweist, wobei die Nockenbahn (41) zwei voneinander in Umfangsrichtung beabstandete Bahnabschnitte (41a, 41b) umfasst, welche jeweils einen von einer Kreisbahn abweichenden, vorzugsweise bogenförmigen, Verlauf aufweisen, wodurch bei einem Passieren des Bahnabschnitts (41a, 41b) durch den Nocken (42) der Knotenabzugshebel (31) aus der ersten Endlage in die zweite Endlage und zurück in die erste Endlage um die Hebelachse (39) verschwenkt wird.

12. Knotereinrichtung (11) nach einem der Ansprüche 1 bis 11, **dadurch gekennzeichnet, dass** der Knoterhaken (17) ein Knoterhakenbasiselement (23) und eine relativ hierzu um eine Knoterschwenkachse (26) zwischen einer Offenstellung und einer Schließstellung schwenkbewegliche Knoterzunge (25) umfasst, wobei die Knoterzunge (25) einen in Richtung des Knoterhakenbasiselements (23) weisenden Vorsprung (28) umfasst, wobei der Vorsprung (28) eine Anlagestruktur (30) umfasst, an welcher das Garnstrangpaar (P) während des Abziehens der Schlaufe (S) von dem Knoterhaken (17) anliegt, wobei sich der Vorsprung (28) ausgehend von einer Innenfläche (29) der Knoterzunge (25) in Richtung des Knoterhakenbasiselements (23) erstreckt, wobei, vorzugsweise, die Anlagestruktur (30) des Vorsprungs (28) und die Innenfläche (29) der Knoterzunge (25) in Richtung der Knoterschwenkachse (26) betrachtet einen stumpfen Winkel zwischen sich ausbilden.

13. Knotereinrichtung (11) nach einem der Ansprüche 1 bis 12, **dadurch gekennzeichnet, dass** die Knotereinrichtung (11) ein Griffelement (57), vorzugsweise einen Handgriff, zur Handhabung der Knotereinrichtung (11) während eines Wartungs-, Montage und/oder Transportvorgangs umfasst.

14. Landwirtschaftliche Quaderballenpresse (1) mit einer Mehrzahl an Knotereinrichtungen (11), **dadurch gekennzeichnet, dass** die Knotereinrichtungen (11) jeweils nach einem der Ansprüche 1 bis 13 ausgebildet sind.

15. Verfahren zur Bildung von zwei aufeinanderfolgenden Schlaufenknoten (K_{S}, K_{S1}, K_{S2}) in einem Garnstrangpaar (P) mittels einer Knotereinrichtung (11) nach einem der Ansprüche 1 bis 13, **dadurch gekennzeichnet, dass** das Verfahren die folgenden Verfahrensschritte umfasst:
- Zuführen des Garnstrangpaares (P) über den Knoterhaken (17) hin zur Halteeinrichtung (45);
- Durchführen einer vollständigen Umdrehung des Knoterhakens (17) mittels der Antriebsscheibe (16) zur Bildung einer Schlaufe (S) in dem Garnstrangpaar (P) durch den Knoterhaken (17) für den ersten Schlaufenknoten (K_{S1});
- Durchführen einer Drehbewegung des drehbaren Halteelements (51) zum Klemmen des Garnstrangpaares (P) in der Halteeinrichtung (45) mittels der Antriebsscheibe (16), wobei die Drehbewegung des drehbaren Halteelements (51) nach zumindest teilweise erfolgter Drehbewegung des Knoterhakens (17) und zumindest teilweise erfolgter Bildung der Schlaufe (S) einsetzt;
- Durchtrennen des Garnstrangpaares (P) durch ein Zusammenwirken des feststehenden Garnmessers (54) mit der Halteeinrichtung (45) und zwar nachdem das Garnstrangpaar (P) in der Halteeinrichtung (45) geklemmt wurde;
- Abziehen der Schlaufe (S) vom Knoterhaken (17) mittels des Knotenabzugshebels (31) zur Bildung des ersten Schlaufenknotens;
- Zuführen des Garnstrangpaares (P) von der Halteeinrichtung (45) über den Knoterhaken (17);
- Durchführen einer vollständigen Umdrehung des Knoterhakens (17) mittels der Antriebsscheibe (16) zur Bildung einer Schlaufe (S) in dem Garnstrangpaar (P) durch den Knoterhaken (17) für den zweiten Schlaufenknoten (K_{S2});
- Durchführen einer Drehbewegung des drehbaren Halteelements (51) zum Freigeben des Garnstrangpaares (P) aus der Halteeinrichtung (45) mittels der Antriebsscheibe (16), wobei die Drehbewegung des drehbaren Halteelements (51) nach zumindest teilweise erfolgter Drehbewegung des Knoterhakens (17) und zumindest teilweise erfolgter Bildung der Schlaufe (S) einsetzt; und
- Abziehen der Schlaufe (S) vom Knoterhaken (17) mittels des Knotenabzugshebels (31) zur Bildung des zweiten Schlaufenknotens (K_{S2}).
